(19) Europäisches Patentamt / European Patent Office / Office européen des brevets

(11) **EP 3 760 756 A1**

(12) **EUROPEAN PATENT APPLICATION**
published in accordance with Art. 153(4) EPC

(43) Date of publication:
06.01.2021 Bulletin 2021/01

(21) Application number: 19761440.7

(22) Date of filing: 01.03.2019

(51) Int Cl.:
$C23C\ 4/11$ (2016.01)  $B32B\ 9/00$ (2006.01)
$B32B\ 15/04$ (2006.01)  $C23C\ 4/073$ (2016.01)
$F01D\ 5/28$ (2006.01)  $F02C\ 7/00$ (2006.01)
$C23C\ 28/00$ (2006.01)

(86) International application number:
**PCT/JP2019/008178**

(87) International publication number:
**WO 2019/168174 (06.09.2019 Gazette 2019/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 02.03.2018 JP 2018038011

(71) Applicants:
• **Japan Fine Ceramics Center**
**Nagoya-shi, Aichi 456-8587 (JP)**
• **Tocalo Co., Ltd.**
**Kobe-shi, Hyogo 650-0047 (JP)**

(72) Inventors:
• **MATSUDAIRA, Tsuneaki**
**Nagoya-shi, Aichi 456-8587 (JP)**
• **KITAOKA, Satoshi**
**Nagoya-shi, Aichi 456-8587 (JP)**
• **KAWASHIMA, Naoki**
**Nagoya-shi, Aichi 456-8587 (JP)**
• **YOKOE, Daisaku**
**Nagoya-shi, Aichi 456-8587 (JP)**
• **TANAKA, Makoto**
**Nagoya-shi, Aichi 456-8587 (JP)**
• **HABU, Yoichiro**
**Akashi-shi, Hyogo 674-0093 (JP)**
• **NAGAO, Mikako**
**Kurokawa-Gun, Miyagi 981-3514 (JP)**
• **NODA, Kazuo**
**Kurokawa-Gun, Miyagi 981-3514 (JP)**
• **ITO, Yoshiyasu**
**Kobe-shi, Hyogo 650-0047 (JP)**
• **OHIDE, Yuhei**
**Akashi-shi, Hyogo 674-0093 (JP)**
• **TAKAGI, Kaito**
**Akashi-shi, Hyogo 674-0093 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(54) **THERMAL BARRIER COATING**

(57) A thermal barrier coating (1) includes: a metal bonding layer (11) made of an alloy containing Al; a thermal barrier layer (15); and an intermediate layer (16) provided between the metal bonding layer (11) and the thermal barrier layer (15). The thermal barrier layer (15) contains a compound represented by the following general Formula (1),

$$Ln_xTa_yHf_zO_{(3x+5y+4z)/2} \cdots \qquad (1)$$

(wherein Ln is an atom of one element selected from among rare earth elements, x is 0 to 1.0, y is 0.8 to 3.0, and z is 0 to 7.0). The intermediate layer (16) contains at least one layer selected from among the following (A) to (C): (A) a layer containing hafnium oxide ($HfO_2$) as a main component; (B) a layer containing, as a main component, a compound consisting of tantalum (Ta), hafnium (Hf), and oxygen (O); and (C) a layer containing, as a main component, a compound consisting of a rare earth element, tantalum (Ta), hafnium (Hf), and oxygen (O).

EP 3 760 756 A1

## FIG. 1

**Description**

TECHNICAL FIELD

The present invention relates to a thermal barrier coating.

BACKGROUND ART

In a gas turbine for power generation, a jet engine for an aircraft, or the like, the temperature of the combustion gas thereof is, for example, as high as 1600 °C. Therefore, as a high-temperature part such as a rotor blade, a stator blade, and a combustor, there is a known part that includes, as a thermal barrier coating (TBC) on the surface of a heat-resistant substrate made of a superalloy containing Ni, Co, or Fe as a main component, a metal bonding layer made of an MCrAlY alloy (M is at least one of Ni, Co, and Fe) having excellent corrosion resistance and oxidation resistance or platinum aluminide having excellent corrosion resistance and oxidation resistance, and a thermal barrier layer provided on the metal bonding layer and containing a ceramic material such as yttria-stabilized zirconia (YSZ) as a main component.
In addition, development and study of a material for a thermal barrier coating, which has better heat resistance than yttria-stabilized zirconia (YSZ), is also in progress.
For example, PATENT LITERATURE 1 proposes a material for a thermal barrier coating, containing a compound represented by the following general Formula (6) such as $YTa_3O_9$.

$$M^1M^2{}_3O_9 \ldots \qquad (6)$$

(wherein $M^1$ is one atom of one element selected from among rare earth elements, and $M^2$ is a tantalum atom or a niobium atom.)

CITATION LIST

PATENT LITERATURE

PATENT LITERATURE 1: Japanese Laid-Open Patent Publication JP 2014-125 656 A

SUMMARY OF THE INVENTION

TECHNICAL PROBLEM

The compound represented by the general Formula (6) described in PATENT LITERATURE 1 is suitable as a material for a thermal barrier coating since the compound has a lower thermal conductivity than YSZ.
On the other hand, when a thermal barrier layer made of the compound represented by the general Formula (6) (for example, $YTa_3O_9$) is laminated on a metal bonding layer made of, for example, an MCrAlY alloy (M is the same as above) or platinum aluminide, the following problem may occur.
Specifically, it is known that, during use under a high-temperature environment, a layer containing aluminum oxide ($Al_2O_3$) as a main component (hereinafter, also referred to as an alumina layer) is formed at the interface between the metal bonding layer made of an MCrAlY alloy (M is the same as above) or platinum aluminide and the thermal barrier layer made of $YTa_3O_9$.
When the alumina layer and the layer made of $YTa_3O_9$ are in contact with each other, a chemical reaction proceeds between $Al_2O_3$ and $YTa_3O_9$ under a high-temperature environment, and each of $Al_2O_3$ and $YTa_3O_9$ is altered, whereby oxidation resistance and thermal barrier properties deteriorate. That is, the metal bonding layer loses its ability to generate $Al_2O_3$, and the thermal barrier layer loses its function as a thermal barrier coating due to deterioration of thermal barrier performance, which may cause peeling or damage to the substrate.

SOLUTION TO THE PROBLEM

The present inventors have conducted an intensive study to solve such a problem. As a result, the present inventors have found that the above problem can be solved by providing a predetermined intermediate layer between the metal bonding layer and the thermal barrier layer, and completed the present invention.

(1) A thermal barrier coating according to the present invention includes:

a metal bonding layer made of an alloy containing Al;
a thermal barrier layer; and
an intermediate layer provided between the metal bonding layer and the thermal barrier layer, wherein
the thermal barrier layer contains a compound represented by the following general Formula (1),

$$Ln_xTa_yHf_zO_{(3x+5y+4z)/2} \dots \qquad (1)$$

(wherein Ln is an atom of one element selected from among rare earth elements, x is 0 to 1.0, y is 0.8 to 3.0, and z is 0 to 7.0), and
the intermediate layer contains at least one layer selected from among the following (A) to (C),

(A) a layer containing hafnium oxide ($HfO_2$) as a main component,
(B) a layer containing, as a main component, a compound consisting of tantalum (Ta), hafnium (Hf), and oxygen (O), and
(C) a layer containing, as a main component, a compound consisting of a rare earth element, tantalum (Ta), hafnium (Hf), and oxygen (O).

The thermal barrier coating is a laminate including a plurality of layers, and includes a thermal barrier layer containing the compound represented by the general Formula (1). The thermal barrier layer has low heat conductivity as compared to a thermal barrier layer made of YSZ, and the thermal barrier coating has excellent thermal barrier performance.

Moreover, in the thermal barrier coating, the intermediate layer is provided between the metal bonding layer made of an alloy containing Al and the thermal barrier layer containing the compound represented by the general Formula (1). The intermediate layer contains at least one layer selected from among the layers (A) to (C).

Therefore, even if an alumina layer is formed on the metal bonding layer due to use under a high-temperature environment, $Al_2O_3$ in the alumina layer and the compound represented by the general Formula (1) can be prevented from reacting with each other. Furthermore, since $Al_2O_3$ in the alumina layer is not solid-dissolved in the intermediate layer, disappearance of the alumina layer can be prevented, and the Al component contained in the metal bonding layer can also be prevented from moving and diffusing to the thermal barrier layer side.

As a result, deterioration of the metal bonding layer due to a reduction in Al of the metal bonding layer can be prevented. Therefore, the thermal barrier coating also has excellent long-term reliability.

In the present specification, the "main component" refers to a component having the highest content ratio among all components and having a content ratio of 40 mol% or greater among all components. The content ratio of the main component among all components is preferably 80 mol% or greater and more preferably 98 mol% or greater.

(2) In the thermal barrier coating, the compound represented by the general Formula (1) is preferably a complex oxide represented by the following general Formula (2).

$$LnTa_3O_9 \dots \qquad (2)$$

(wherein Ln is an atom of one element selected from among rare earth elements) The thermal barrier layer containing the complex oxide represented by the general Formula (2) has particularly excellent thermal barrier performance.

(3) The thermal barrier coating preferably further includes a layer provided between the metal bonding layer and the intermediate layer and containing aluminum oxide ($Al_2O_3$).

The thermal barrier coating has one technical feature of preventing solid dissolution of $Al_2O_3$ in the intermediate layer by providing the intermediate layer. Thus, the thermal barrier coating including the layer containing aluminum oxide is suitable as a thermal barrier coating that achieves the advantageous effects of the present invention.

Moreover, by providing the layer containing aluminum oxide, stability under a high-temperature environment and oxygen permeation prevention of the thermal barrier coating can be ensured.

(4) In the thermal barrier coating, the thermal barrier layer preferably has a segment structure including a plurality of columnar structures.

In this case, the thermal barrier layer is suitable for avoiding stress concentration at the thermal barrier layer due to expansion/contraction of each layer when the thermal barrier coating is used under heat cycle conditions. Therefore, damage due to peeling, or the like, is particularly less likely to occur in the thermal barrier layer having the above segment structure.

(5) In the thermal barrier coating, the intermediate layer preferably includes a layer having a porosity of 5 % by volume or less.

In this case, there are almost no pores penetrating the intermediate layer, and rapid solid dissolution of $Al_2O_3$ through

pores and entry and permeation of corrosive substances from the thermal barrier layer side can be prevented. Therefore, the intermediate layer is more suitable for ensuring stability of the intermediate layer and the alumina layer under a high-temperature environment.

(6) In the thermal barrier coating, preferably, the intermediate layer includes the layer (A) and the layer (B), and the layer (A) is provided at the metal bonding layer side.

In this case, as compared to the case where the intermediate layer is composed of only the layer (A), the adhesion between the intermediate layer and the thermal barrier layer is significantly improved, and thermal stress is relieved. Therefore, during use of the thermal barrier coating, peeling between the intermediate layer and the thermal barrier layer is less likely to occur.

(7) In the thermal barrier coating, preferably, the intermediate layer includes the layer (B), and the layer (B) is a layer containing a compound represented by the following general Formula (3) as a main component.

$$Ta_yHf_zO_{(5y+4z)/2} \ (y = 2.0, 5.0 \leq z \leq 7.0) \ ... \ \ \ \ \ (3).$$

The layer containing the compound represented by the general Formula (3) as a main component has excellent adhesion to the thermal barrier layer and the layer (A), and peeling of the thermal barrier layer becomes more unlikely to occur by providing the layer containing the compound represented by the general Formula (3) as a main component.

(8) In the thermal barrier coating, preferably, the intermediate layer includes the layer (A) and the layer (C), the layer (A) is provided at the metal bonding layer side, and the layer (C) is a layer containing, as a main component, a compound consisting of a rare earth element that is the same as Ln in the general Formula (1), tantalum (Ta), hafnium (Hf), and oxygen (O).

In this case, as compared to the case where the intermediate layer is composed of only the layer (A), the adhesion between the intermediate layer and the thermal barrier layer is significantly improved, and thermal stress is relieved. Therefore, during use of the thermal barrier coating, peeling between the intermediate layer and the thermal barrier layer is less likely to occur.

ADVANTAGEOUS EFFECTS OF THE INVENTION

In the thermal barrier coating according to the present invention, the thermal barrier layer contains the compound represented by the general Formula (1) and thus is excellent in low thermal conductivity, and the thermal barrier coating is less likely to be thermally deteriorated since the thermal barrier coating includes the intermediate layer. Thus, the thermal barrier coating can be used over a long period of time under high temperature (for example, 1100 °C to 1800 °C) conditions.

Therefore, the thermal barrier coating according to the present invention is suitable for use for high-temperature parts in gas turbines for power generation, jet engines for an aircraft, etc.

BRIEF DESCRIPTION OF DRAWINGS

FIG. 1 is a schematic cross-sectional view showing an example of a thermal barrier coating according to a first embodiment.
FIG. 2 is a schematic diagram showing the structure of a complex oxide represented by general Formula (2).
FIG. 3 is an enlarged cross-sectional view schematically showing a thermal barrier layer included in the thermal barrier coating shown in FIG. 1.
FIG. 4 is an enlarged cross-sectional view showing an example of a second intermediate layer included in the thermal barrier coating shown in FIG. 1.
FIG. 5 is a schematic cross-sectional view showing an example of a thermal barrier coating according to a second embodiment.
FIG. 6 is a graph showing the results of Evaluation Test 1.
FIG. 7 is a graph showing the results of Evaluation Test 2.
FIG. 8 is an X-ray diffraction pattern obtained in Evaluation Test 3.
FIG. 9 is an X-ray diffraction pattern obtained in Evaluation Test 4.
FIG. 10 is an X-ray diffraction pattern obtained in Evaluation Test 5.
FIG. 11 is an X-ray diffraction pattern obtained in Evaluation Test 6.

FIG. 12 is an observation photograph of a cross section of a thermal barrier coating produced in Example 1 with a scanning electron microscope.

DESCRIPTION OF EMBODIMENTS

Hereinafter, embodiments of the present invention will be described with reference to the drawings.

First Embodiment

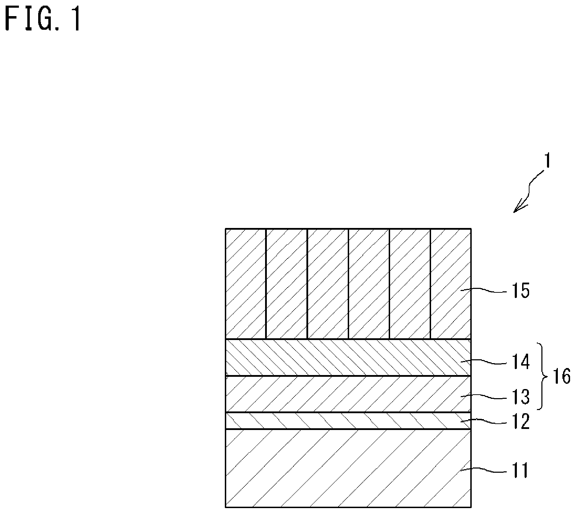

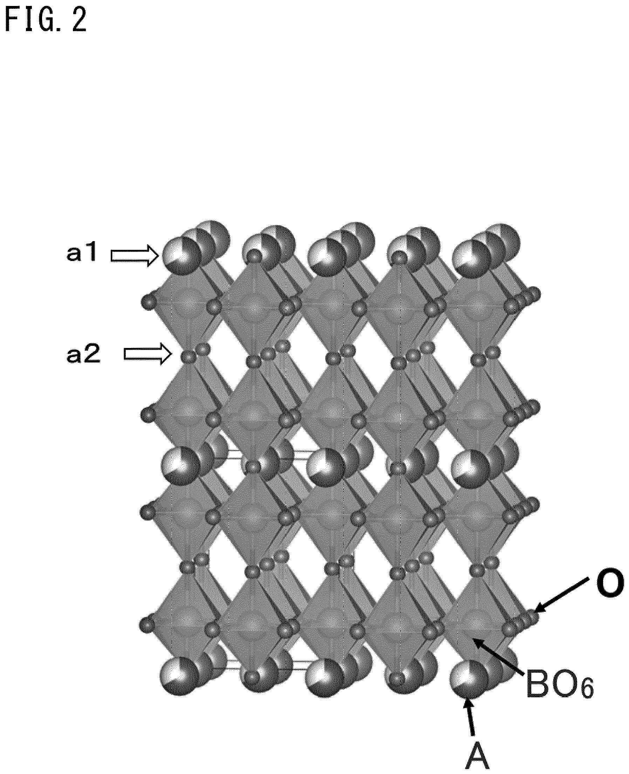

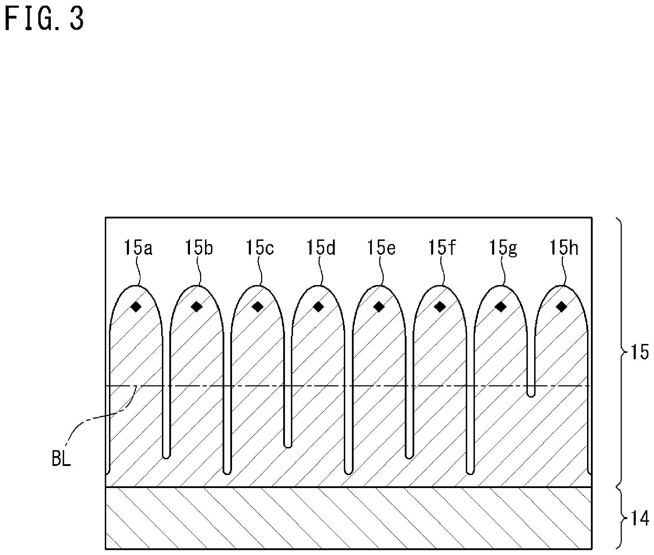

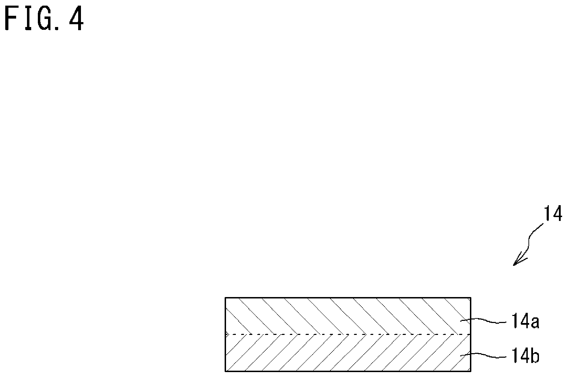

FIG. 1 is a schematic cross-sectional view showing an example of a thermal barrier coating according to the present embodiment. FIG. 2 is a schematic diagram showing the structure of a complex oxide represented by general Formula (2). FIG. 3 is an enlarged cross-sectional view schematically showing a thermal barrier layer included in the thermal barrier coating shown in FIG. 1. FIG. 4 is an enlarged cross-sectional view showing an example of a second intermediate layer included in the thermal barrier coating shown in FIG. 1.

The thermal barrier coating 1 according to the present embodiment is a laminate that includes: a metal bonding layer 11; an alumina layer 12 formed on the surface of the metal bonding layer 11 and containing aluminum oxide ($Al_2O_3$) as a main component; a first intermediate layer 13 laminated on the alumina layer 12; a second intermediate layer 14 laminated on the first intermediate layer 13; and a thermal barrier layer 15 laminated on the second intermediate layer 14. The respective layers included in the thermal barrier coating 1 are in close contact with each other. The thermal barrier coating 1 has the first intermediate layer 13 and the second intermediate layer 14 as an intermediate layer 16.

Metal Bonding Layer

The metal bonding layer 11 is a layer made of an alloy containing Al and preferably has a melting point of 1300 °C or higher.

For the metal bonding layer 11, for example, a Fe-based alloy, a Ni-based alloy, a Co-based alloy, an aluminide-type intermetallic compound, etc., can be used. Specific examples thereof include an MCrAlY alloy (M is at least one of Ni, Co, and Fe), platinum aluminide, and nickel-platinum-aluminide.

The metal bonding layer 11 may be laminated on another heat-resistant substrate (not shown).

An example of the other heat-resistant substrate is at least one metal, or an alloy made of at least two metals, selected from among Ni, Co, Fe, Nb, Ta, Mo, W, Pt, Ir, Cr, Al, and the like. As the other heat-resistant substrate, a bulk material made of a superalloy containing Ni, Co, or Fe as a main component or the like is preferable.

Alumina Layer

The crystal phase of the aluminum oxide contained in the alumina layer may be any of $\alpha$-alumina, $\beta$-alumina, $\gamma$-alumina, $\alpha$-alumina, $\chi$-alumina, $\eta$-alumina, $\theta$-alumina, and $\kappa$-alumina, or may be a combination of two or more of these aluminas.

The alumina layer 12 is preferably a layer made of $\alpha$-alumina from the viewpoints of stability at high temperature, oxygen permeation prevention, and the like.

The alumina layer 12 is preferably made of only aluminum oxide ($Al_2O_3$), but may contain another compound composed of $NiAl_2O_4$, $(Co, Ni)(Al, Cr)_2O_4$, or the like as long as the advantageous effects of the present invention are obtained.

It is known that, when the thermal barrier coating 1 having the metal bonding layer 11 made of an MCrAlY alloy (M is the same as above), platinum aluminide, or the like and containing Al is used in a high-temperature environment, an alumina layer is formed on the surface of the metal bonding layer 11 as described above.

Therefore, the alumina layer 12 included in the thermal barrier coating 1 may be a layer that is inevitably formed on the surface of the metal bonding layer 11 containing Al during use. In this case, although described in a second embodiment described later, it is only necessary to produce a thermal barrier coating 1 having no alumina layer 12 at the time of production. In such a thermal barrier coating 1, an alumina layer is formed during use in a high-temperature environment.

On the other hand, the alumina layer 12 included in the thermal barrier coating 1 may be a layer that is intentionally provided on the surface of the metal bonding layer 11 before the intermediate layer 16 is laminated on the metal bonding layer 11 in the production process of the thermal barrier coating 1.

In this case, the thermal barrier coating 1 includes the alumina layer 12 at a time point after production and before use.

As a method for intentionally forming the alumina layer 12 on the surface of the metal bonding layer 11, there is, for example, a method of forcibly oxidizing the surface of the metal bonding layer 11 by heating at a high temperature in an oxygen-containing atmosphere, and the method is preferably a method of forcibly oxidizing the surface of the metal bonding layer 11 by heating at a high temperature in an oxygen-containing atmosphere after the surface of the metal bonding layer 11 is subjected to Al diffusion treatment or the like to increase the Al content of the metal bonding layer 11.

Meanwhile, the same effect can also be obtained by forming an alumina layer directly on the surface of the metal bonding layer 11 by physical vapor deposition (PVD) or chemical vapor deposition (CVD).

The thickness of the alumina layer 12 is not particularly limited, but, in the case of forming the alumina layer 12 on the surface of the metal bonding layer 11 during production of the thermal barrier coating 1, the thickness of the alumina layer 12 is preferably 0.5 $\mu$m to 10 $\mu$m, more preferably 0.5 $\mu$m to 5 $\mu$m, and further preferably 0.5 $\mu$m to 2 $\mu$m from the viewpoint of durability, etc., under heat cycle conditions.

Meanwhile, the thickness of the alumina layer 12 that is inevitably formed on the surface of the metal bonding layer 11 during use of the thermal barrier coating 1 cannot be generally stated since the thickness also depends on usage conditions, etc., but the thickness is preferably 0.5 $\mu$m to 10 $\mu$m, more preferably 0.5 $\mu$m to 5 $\mu$m, and further preferably 0.5 $\mu$m to 2 $\mu$m.

Intermediate Layer

The intermediate layer 16 included in the thermal barrier coating 1 according to the present embodiment includes the first intermediate layer 13 and the second intermediate layer 14 laminated on the first intermediate layer 13.

First Intermediate Layer

The first intermediate layer 13 is a layer containing hafnium oxide ($HfO_2$) as a main component (hereinafter, also referred to as a hafnia layer).

Even if the hafnia layer and the alumina layer are exposed to an atmosphere of 1600 °C in a state where both layers are in contact with each other, $Al_2O_3$ is not solid-dissolved in $HfO_2$, and thus the alumina layer does not disappear. In addition, the Al component in the metal bonding layer 11 does not diffuse toward the thermal barrier layer 15. Therefore, it is possible to avoid problems (degradation of the metal bonding layer, peeling between each layer, damage to the substrate, etc.) caused by Al in the metal bonding layer 11 moving to another layer to be depleted, as described above.

The first intermediate layer 13 is preferably made of only hafnium oxide ($HfO_2$), but may contain another compound as long as the advantageous effects of the present invention are obtained.

The first intermediate layer 13 preferably has a porosity of 5 % by volume or less. When the porosity of the first intermediate layer 13 is set to 5 % by volume or less, there are no pores penetrating the first intermediate layer 13, and rapid solid dissolution of $Al_2O_3$ through such pores and entry and permeation of corrosive substances from the thermal barrier layer side can be prevented. In this case, the first intermediate layer 13 is suitable for ensuring the stability of the alumina layer and the first intermediate layer under a high-temperature environment. The porosity is more preferably 3 % by volume or less. In this case, the first intermediate layer 13 has more excellent environmental resistance.

The porosity of the first intermediate layer 13 is a value obtained by observing a cross-section of a coating with a scanning electron microscope (SEM) and calculating the area of pores in the entire coating.

The thickness of the first intermediate layer 13 is not particularly limited, but is preferably 10 $\mu$m to 50 $\mu$m.

If the thickness of the first intermediate layer 13 is less than 10 $\mu$m, movement and diffusion of Al cannot be sufficiently suppressed in some cases. On the other hand, even if the thickness of the first intermediate layer 13 is greater than 50 $\mu$m, the effect of suppressing movement and diffusion of Al is not necessarily improved significantly.

The thickness of the first intermediate layer 13 is more preferably 10 $\mu$m to 20 $\mu$m.

Second Intermediate Layer

The second intermediate layer 14 is a layer containing, as a main component, a compound consisting of tantalum (Ta), hafnium (Hf), and oxygen (O) or a compound containing, in addition to these components, a rare earth element that is the same as Ln in the general Formula (1).

The compound consisting of tantalum (Ta), hafnium (Hf), and oxygen (O) is represented by the following general Formula (3).

$$Ta_yHf_zO_{(5y+4z)/2} \ (y = 2.0, 5.0 \leq z \leq 7.0) \ ... \qquad (3)$$

A specific example of the compound represented by the general Formula (3) is $Hf_6Ta_2O_{17}$.

The compound consisting of the rare earth element that is the same as Ln in the general Formula (1), tantalum (Ta), hafnium (Hf), and oxygen (O) is represented by the following general Formula (4) or the following general Formula (5).

$$Ln_xTa_yHf_zO_{(3x+5y+4z)/2} \ (0<x \leq 0.25, \ 0<y \leq 0.25, \ 0.5 \leq z \leq 1.0) \ ... \qquad (4)$$

$$Ln_xTa_yHf_zO_{(3x+5y+4z)/2} \ (0.5 \leq x \leq 1.0, \ 0.5 \leq y \leq 1.0, \ 0<z \leq 1.0) \ ... \qquad (5).$$

The second intermediate layer 14 is a layer having good adhesion to one or both of the first intermediate layer (hafnia layer) 13 and the thermal barrier layer 15. In the thermal barrier coating 1, since the second intermediate layer 14 is provided, peeling of the thermal barrier layer 15 is less likely to occur.

The compound represented by the general Formula (4) is a compound in which Ln and Ta are solid-dissolved in $HfO_2$, and a layer containing this compound as a main component has particularly excellent adhesion to the hafnia layer 13. In addition, the compound represented by the general Formula (4) itself has excellent heat barrier properties.

The compound represented by the general Formula (5) is a compound in which Hf is solid-dissolved in $LnTaO_4$, and a layer containing this compound as a main component has particularly excellent adhesion to the thermal barrier layer 15. In addition, the compound represented by the general Formula (5) itself has excellent heat barrier properties.

The second intermediate layer 14 may be composed of two layers, an inner second intermediate layer 14b and an outer second intermediate layer 14a as shown in FIG. 4. In this case, preferably, the inner second intermediate layer 14b is a layer containing the compound represented by the general Formula (4) as a main component, and the outer second intermediate layer 14a is a layer containing the compound represented by the general Formula (5) as a main component.

Moreover, in the case where the inner second intermediate layer 14b is a layer containing the compound represented by the general Formula (4) as a main component, and the outer second intermediate layer 14a is a layer containing the compound represented by the general Formula (5) as a main component, the inner second intermediate layer 14b has good adhesion to the hafnia layer 13, the outer second intermediate layer 14a has good adhesion to the complex oxide contained in the thermal barrier layer 15 and represented by the general Formula (1), and the adhesion between the compound represented by the general Formula (4) and the compound represented by the general Formula (5) is also good. Thus, the second intermediate layer 14 has very good adhesion to each of the first intermediate layer (hafnia layer) 13 and the thermal barrier layer 15.

The thickness of the second intermediate layer 14 is not particularly limited, but is preferably 0.2 $\mu$m to 30 $\mu$m.

If the thickness of the second intermediate layer 14 is less than 0.2 $\mu$m, it is difficult for the second intermediate layer 14 to uniformly cover the entirety of the first intermediate layer (hafnia layer) 13, and sufficient adhesion cannot be obtained in some cases. On the other hand, if the thickness is greater than 30 $\mu$m, the second intermediate layer 14 may cause generation of new thermal stress.

In addition, in the case where the second intermediate layer 14 is composed of two layers, the outer second intermediate layer 14a and the inner second intermediate layer 14b, each of the thicknesses of the outer second intermediate layer 14a and the inner second intermediate layer 14b is preferably 0.1 $\mu$m to 15 $\mu$m.

The compound forming the second intermediate layer 14 may be a compound in which x = 0 and/or y = 0 in the general Formula (4), or may be a compound in which z = 0 in the general Formula (5).

Thermal Barrier Layer

The thermal barrier layer 15 is a layer containing a compound represented by the following general Formula (1) as a main component.

$$Ln_xTa_yHf_zO_{(3x+5y+4z)/2} \ ... \qquad (1)$$

(wherein Ln is an atom of one element selected from among rare earth elements, x is 0 to 1.0, y is 0.8 to 3.0, and z is 0 to 7.0)

Examples of the rare earth element that represents the atom Ln in the general Formula (1) include scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu).

Among them, Yb is preferable. This is because a compound represented by the general Formula (1) in which Ln is Yb has a particularly low thermal conductivity among them, and causes no phase transformation accompanying a rise and fall in temperature, and the thermal conductivity has negative temperature dependency in that the thermal conductivity gradually decreases with a rise in temperature.

The thermal barrier layer 15 is preferably made of only the compound represented by the general Formula (1), but may contain another compound as long as the advantageous effects of the present invention are obtained.

In the case where the compound represented by the general Formula (1) is a compound represented by the following general Formula (2), the compound is a cation-deficient-type defective perovskite complex oxide (hereinafter, also referred to merely as "complex oxide") and has a structure shown in FIG. 2.

$$LnTa_3O_9 \, .. \qquad (2)$$

(wherein Ln is an atom of one element selected from among rare earth elements)

This structure is a structure in which 1/3 of the A ions in the a1 plane and all the A ions in the a2 plane are deficient in a perovskite structure represented by $A_3B_3O_9$, and 2/3 of the A ions are deficient in the entire crystal lattice.

When the thermal barrier layer 15 contains the complex oxide represented by the general Formula (2), the thermal barrier layer 15 becomes more excellent in low thermal conductivity, and can impart excellent thermal barrier performance to the thermal barrier coating 1.

In addition, when the thermal barrier layer 15 containing the above complex oxide is included, excellent corrosion resistance, oxidation resistance, and heat resistance can also be imparted to the thermal barrier coating 1.

The melting point of the complex oxide represented by the general Formula (2) is normally 1700 °C or higher, and the thermal conductivity, of the complex oxide, measured according to JIS R 1611 by the laser flash method (measurement temperature: 20 °C to 1400 °C) is normally less than 3.0 W/(m·K) at the material stage (sintered body).

The number of compounds represented by the general Formula (1) and contained in the thermal barrier layer 15 may be one, or may be two or more. In the case where the thermal barrier layer 15 contains two or more compounds represented by the general Formula (1), the thermal barrier layer 15 preferably contains the complex oxide represented by the general Formula (2) as at least one of the compounds, and the complex oxide represented by the general Formula (2) is more preferably a main component.

In addition, in the case where the thermal barrier layer 15 contains two or more complex oxides represented by the general Formula (2), at least one of the complex oxides is preferably $YbTa_3O_9$. In this case, the main component of the thermal barrier layer 15 is preferably $YbTa_3O_9$.

Moreover, the thermal barrier layer 15 is preferably made of only the complex oxide(s) represented by the general Formula (2).

The thermal barrier layer 15 preferably has a segment structure including a plurality of columnar structures 15a to 15h erected so as to extend from the second intermediate layer 14 side to the outermost layer side (upper side in the drawing) as shown in a schematic observation image in FIG. 3.

In the case where the thermal barrier layer 15 has the above segment structure, a minute gap is present between adjacent columnar structures. Thus, when the thermal barrier coating 1 is used under heat cycle conditions, even if expansion/contraction corresponding to temperature change occurs in each layer, stress concentration due to the expansion/contraction of each layer is less likely to occur at the thermal barrier layer 15. Therefore, the thermal barrier layer 15 having the segment structure is particularly less likely to be damaged under heat cycle conditions.

In the case where the thermal barrier layer 15 has the segment structure, the porosity of the thermal barrier layer 15 is preferably 3 % to 25 % by volume. If the porosity of the thermal barrier layer 15 is less than 3 % by volume, a sufficient reduction in thermal conductivity due to the presence of pores cannot be exhibited, and the required thermal barrier properties cannot be obtained in some cases.

On the other hand, if the porosity is greater than 25 % by volume, a sufficient reduction in thermal conductivity due to the presence of pores is exhibited and excellent thermal barrier properties are obtained, but resistance to erosion due to particulate matter and the like contained in combustion gas and the like cannot be obtained in some cases. The porosity is more preferably 5 % to 20 % by volume.

The porosity of the thermal barrier layer 15 is a value obtained by observing a cross-section of a coating with a scanning electron microscope (SEM) and calculating the area of pores in the entire coating.

In the case where the thermal barrier layer 15 has the segment structure, the number of columnar structures included in the segment structure (segment number) is preferably 5 to 30 structures/mm as a segment number per unit length.

If the segment number per unit length is less than 5 structures/mm, a sufficient effect of avoiding damage under heat cycle conditions cannot be achieved in some cases. On the other hand, if the segment number is greater than 30 structures/mm, deterioration of the underlayer may occur due to entry of combustion gas.

The segment number per unit length (structures/mm) is a value calculated by the following method.

First, an image of a cross section of the thermal barrier layer 15 along the thickness direction (see FIG. 3) is acquired, and a virtual reference line (alternate long and short dash line in FIG. 3) BL that is parallel to the surface of the layer (second intermediate layer 14 in FIG. 3) immediately below the thermal barrier layer 15 is drawn at a position corresponding to 1/2 of the thickness of the thermal barrier layer 15 in the acquired image. Then, the number of columnar structures crossed by the virtual reference line BL is counted, and the number of columnar structures crossed by a virtual reference line BL having a length of 1 mm is calculated as a segment number per unit length (structures/mm).

At this time, the segment number per unit length (structures/mm) is calculated using at least a virtual reference line having a length of 10 mm in total.

In the example of FIG. 3, eight columnar structures 15a to 15h (see ♦ marks in the drawing) are present.

The thickness of the thermal barrier layer 15 is not particularly limited, but is preferably 100 $\mu$m to 2000 $\mu$m from the viewpoint of properties such as low thermal conductivity and durability as well as corrosion resistance, oxidation resistance, heat resistance, and an effect of protecting the metal bonding layer.

The thickness of the thermal barrier layer 15 is more preferably 200 $\mu$m to 500 $\mu$m.

The thermal barrier coating 1 according to the present embodiment can be produced by sequentially laminating each layer from the metal bonding layer 11 side.

For example, a coating of each layer may be sequentially laminated on the surface of a heat-resistant substrate made of a Ni-based superalloy, a Co-based superalloy, a Fe-based superalloy, or the like.

In the formation of the above coating, the metal bonding layer 11, the first intermediate layer 13, and the second intermediate layer 14 may be produced, for example, by a method such as electron beam physical vapor deposition (EB-PVD), atmospheric plasma spraying, low pressure plasma spraying, suspension thermal spraying (suspension plasma spraying, suspension high velocity flame spraying, etc.), high velocity flame spraying, and sintering.

A more specific method is as follows.

The metal bonding layer 11 is preferably formed by atmospheric plasma spraying, low pressure plasma spraying, high velocity flame spraying, or EB-PVD.

The first intermediate layer 13 is preferably formed by suspension thermal spraying, atmospheric plasma spraying, low pressure plasma spraying, or EB-PVD.

The second intermediate layer 14 is preferably formed by suspension thermal spraying, atmospheric plasma spraying, low pressure plasma spraying, or EB-PVD.

In addition, as described above, the alumina layer 12 may be intentionally formed on the surface of the metal bonding layer 11, or may be inevitably formed during use.

The thermal barrier layer 15 may be formed by a method such as electron beam physical vapor deposition (EB-PVD), atmospheric plasma spraying, low pressure plasma spraying, suspension thermal spraying, and sintering, using the compound represented by the general Formula (1).

A method for producing the complex oxide represented by the general Formula (2) is generally a method in which a compound containing the rare earth element forming the atom Ln in the general Formula (2) (hereinafter, referred to as a "compound (m1)") and a compound containing Ta (hereinafter, referred to as a "compound (m2)") are blended such that the molar ratio of the atom Ln and Ta is a predetermined ratio, and the mixture is heat-treated.

Furthermore, in order to obtain a more uniform complex oxide, for example, a method of obtaining a mixture containing urea and then heat-treating the mixture may be adopted.

As the compound (m1) and the compound (m2), oxides, hydroxides, sulfates, carbonates, nitrates, phosphates, halides, etc., can be used. Among them, in the case of obtaining a complex oxide having a more uniform composition, water-soluble compounds are preferable, but water-insoluble compounds can also be used.

A preferable method for producing the complex oxide is as follows.

First, an aqueous solution or aqueous dispersion (suspension) containing urea and the compound (m1) and the compound (m2) that are blended such that the molar ratio of the atom Ln and Ta is 1:3, is prepared. The concentration of the compound (m1) is preferably 0.02 to 0.1 mol/l and more preferably 0.02 to 0.05 mol/l. The concentration of the compound (m2) is preferably 0.02 to 0.1 mol/l and more preferably 0.02 to 0.05 mol/l. The concentration of urea is preferably 2 to 10 mol/l and more preferably 2 to 5 mol/l.

Next, the mixture liquid is heated under reflux cooling at a temperature of 80 °C to 95 °C to carry out a urea hydrolysis reaction. The reaction time is normally 10 to 20 hours.

Thereafter, depending on the form of the reaction product contained in the reaction system, centrifugation or the like is performed as necessary, and the reaction product is collected. Then, the reaction product is washed with water, alcohol, or the like, dried, and ground as necessary, to obtain powder composed of a first precursor compound.

Next, the powder composed of the first precursor compound is sized, and subjected to press molding or the like as necessary, to produce a molded product having a plate shape, a lump shape, or the like. Then, the molded product is heat-treated (calcined) for about 1 hour to 3 hours at a temperature of 1200 °C to 1500 °C in an atmosphere containing oxygen gas to obtain a calcined product.

Then, the obtained calcined product is ground and sized as necessary. Then, the product is subjected to press molding or the like as necessary to produce a molded product having a plate shape, a lump shape, or the like, and the molded product is heat-treated for about 1 hour to 3 hours at a temperature of 1400 °C to 1700 °C in an atmosphere containing oxygen gas to obtain the complex oxide represented by the general Formula (2).

The method for forming the thermal barrier layer 15 is preferably a method of performing suspension thermal spraying using a material containing the compound represented by the general Formula (1) and having an average particle diameter of 0.05 $\mu$m to 5 $\mu$m, or the compound represented by the general Formula (2) and having an average particle diameter of 0.05 $\mu$m to 5 $\mu$m. This method is suitable as a method for forming the thermal barrier layer 15 having the segment structure.

In the case of forming the thermal barrier layer 15 having the segment structure by suspension thermal spraying, the porosity in the segment structure and the segment number per unit length can be controlled by changing a heat input amount, a spraying distance, a traverse speed, and a pitch that are spraying conditions.

Second Embodiment

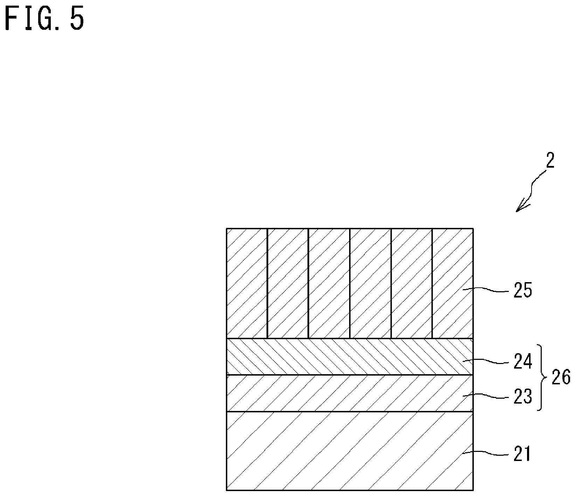

FIG. 5 is a schematic cross-sectional view showing an example of a thermal barrier coating according to the present embodiment.

The thermal barrier coating according to the present embodiment is a thermal barrier coating produced without providing an alumina layer, and is a thermal barrier coating 2 that includes a metal bonding layer 21, an intermediate layer 26 (a first intermediate layer 23 and a second intermediate layer 24) laminated on the surface of the metal bonding layer 21, and a thermal barrier layer 25 laminated on the second intermediate layer 24 as shown in FIG. 5.

The configuration of the metal bonding layer 21, the first intermediate layer 23, the second intermediate layer 24, and the thermal barrier layer 25 in the thermal barrier coating 2 is the same as that in the thermal barrier coating 1 according to the first embodiment.

The thermal barrier coating 2 having such a layer configuration is an unused thermal barrier coating 2. When the thermal barrier coating 2 is used, an alumina layer is gradually formed at the first intermediate layer 23 side of the metal bonding layer 21 with a lapse of use time, and the layer configuration becomes the same as that of the thermal barrier coating 1 according to the first embodiment.

Such a thermal barrier coating, in which there is no alumina layer when the thermal barrier coating is unused and in which an alumina layer is formed with a lapse of use time, is also one of embodiments of the present invention.

Third Embodiment

In a thermal barrier coating according to an embodiment of the present invention, only a layer containing hafnium oxide ($HfO_2$) as a main component may be provided as an intermediate layer.

In this case, the layer containing hafnium oxide ($HfO_2$) as a main component is formed directly on a metal bonding layer (or alumina layer), and a thermal barrier layer is further formed directly on the hafnia layer.

Fourth Embodiment

In a thermal barrier coating according to an embodiment of the present invention, only a layer containing, as a main component, a compound consisting of tantalum (Ta), hafnium (Hf), and oxygen (O) may be provided as an intermediate layer.

In this case, the layer containing, as a main component, a compound consisting of tantalum (Ta), hafnium (Hf), and oxygen (O) is formed directly on a metal bonding layer (or alumina layer), and a thermal barrier layer is further formed directly on the intermediate layer.

Here, a specific example of the compound consisting of tantalum (Ta), hafnium (Hf), and oxygen (O) is the compound represented by the general Formula (3).

Fifth Embodiment

In a thermal barrier coating according to an embodiment of the present invention, only a layer containing, as a main component, a compound consisting of a rare earth element, tantalum (Ta), hafnium (Hf), and oxygen (O) may be provided as an intermediate layer.

In this case, the layer containing, as a main component, a compound consisting of a rare earth element, tantalum (Ta), hafnium (Hf), and oxygen (O) is formed directly on a metal bonding layer (or alumina layer), and a thermal barrier layer is further formed directly on the intermediate layer.

Here, the rare earth element is preferably the same rare earth element as Ln in the general Formula (1). In addition, specific examples of the compound consisting of the rare earth element, tantalum (Ta), hafnium (Hf), and oxygen (O) include the compound represented by the general Formula (4) and the compound represented by the general Formula (5).

Other Embodiments

In the first embodiment and the second embodiment, the intermediate layer included in the thermal barrier coating may include a first intermediate layer containing, as a main component, a compound consisting of tantalum (Ta), hafnium (Hf), and oxygen (O), and a second intermediate layer containing, as a main component, a compound containing a rare earth element that is the same as Ln in the general Formula (1) in addition to tantalum (Ta), hafnium (Hf), and oxygen (O).

In the first embodiment and the second embodiment, the compound contained in the second intermediate layer and consisting of tantalum (Ta), hafnium (Hf), and oxygen (O), and the compound containing the rare earth element that is the same as Ln in general Formula (1) in addition to these components, may each have a composition ratio that gradually changes from the first intermediate layer side toward the thermal barrier layer side.

The compounds represented by the general Formula (4) and the general Formula (5) themselves have excellent heat barrier properties, and thus can also be used for a thermal barrier layer. In this case, the thermal barrier layer may contain, as a main component, the compound represented by the general Formula (4) or the compound represented by the general Formula (5), or may be made of only the compound represented by the general Formula (4) or the compound represented by the general Formula (5).

The thermal barrier coatings according to the embodiments of the present invention are suitable for use for, for example, high-temperature parts such as rotor blades in jet engines for an aircraft and gas turbines for power generation, high-temperature parts in various plants and various engines of automobiles and the like, etc.

When the thermal barrier coatings are used for high-temperature parts such as combustors in jet engines for an aircraft, the operating temperature can be increased to improve fuel efficiency.

Moreover, when the thermal barrier coatings are used for high-temperature parts such as rotor blades in gas turbines for power generation, the operating temperature can be increased to improve power generation efficiency.

EVALUATION TESTS

The following evaluation tests were conducted in order to confirm the performance of the thermal barrier coatings according to the embodiments of the present invention.

Evaluation Test 1

$Hf_6Ta_2O_{17}$, which is one of the compounds forming the intermediate layers in the thermal barrier coatings according to the embodiments of the present invention, was evaluated for heat conduction performance.

(1) Production of Evaluation Sample ($Hf_6Ta_2O_{17}$)

25 g (0.078 mol) of $HfCl_4$ powder (Wako Pure Chemical Corporation) having a purity of 99.9 % or higher was put into 773 g of distilled water contained in a reactor made of a fluorine resin, and the mixture was stirred at room temperature (25 °C) for 1 hour to obtain a colorless transparent aqueous solution. Next, 586 g (9.8 mol) of urea was added to this aqueous solution, and the mixture was stirred at room temperature (25 °C) for 1 hour. Then, 6 g (0.014 mol) of $Ta_2O_5$ powder (manufactured by RARE METALLIC Co., Ltd.) having a purity of 99.9 % or higher was added to the obtained colorless transparent aqueous solution, and the mixture was stirred at room temperature (25 °C) for 7 hours to obtain a suspension.

Next, the suspension was heated to 95 °C and reacted (urea hydrolysis reaction) with stirring under reflux cooling (reaction time: 14 hours). Then, the obtained reaction solution was centrifuged at 25 °C and 4800 rpm for 30 minutes, and the gel in the lower layer was collected. This gel was put into a large amount of distilled water, and the mixture was sufficiently stirred. Then, the mixture was centrifuged under the same conditions as above, and the gel in the lower layer was collected.

Then, the precipitate was heated in an air atmosphere at 1700 °C for 1 hour, ground in an alumina mortar, and sieved (100 mesh) to collect fine powder.

This fine powder was subjected to press molding (pressure: 25 MPa). Then, this molded body was heat-treated at 1600 °C for 2 hours by hot pressing (40 MPa, Ar atmosphere). The obtained fired body was dry-ground in a mortar at room temperature (25 °C), and X-ray diffraction measurement was performed on the ground product to confirm that the ground product had an orthorhombic crystal system composed of $Hf_6Ta_2O_{17}$. The density $\rho$ was 10.4 g/cm$^3$.

(2) Production of Comparative Sample (7 wt% $Y_2O_3$-$ZrO_2$)

7 wt% $Y_2O_3$-$ZrO_2$ powder (Tosoh Corporation, TZ-4YS) was subjected to press molding (pressure: 25 MPa). Then, this molded body was heat-treated in an air atmosphere at 1500 °C for 5 hours. The density $\rho$ was 9.91 g/cm$^3$.

(3) Measurement of Thermal Conductivity

Each of the evaluation sample ($Hf_6Ta_2O_{17}$) and the comparative sample (7 wt% $Y_2O_3$-$ZrO_2$) was subjected to a laser flash method (according to JIS R 1611) to measure thermal conductivities at 25 °C, 100 °C, 200 °C, 300 °C, 400 °C, 500 °C, 600 °C, 700 °C, 800 °C, 900 °C, and 1000 °C.

Since the thermal conductivity of a solid is affected by pores, and becomes a low value when the solid includes pores, correction was performed using a correction equation shown in the following Formula (7) (reference literature: C. Wan, et al., Acta Mater., 58, 6166-6172 (2010)).

$$k'/k = 1-4/3\varphi \qquad \ldots(7)$$

(wherein k' is the thermal conductivity of the specimen, k is the thermal conductivity as a dense substance, and $\varphi$ is the porosity.)

Here, the measured value of thermal conductivity was corrected using the above equation (7), and the corrected thermal conductivity was used as an evaluation value.

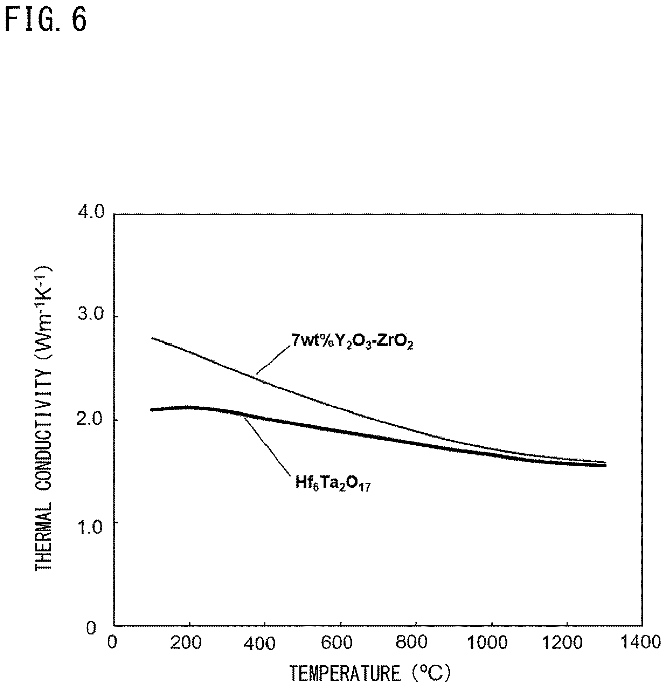

FIG. 6 is a graph showing the results of Evaluation Test 1 and shows the temperature dependence of thermal conductivity.

As shown in FIG. 6, it was clarified that the thermal conductivity of $Hf_6Ta_2O_{17}$ consistently exhibited a lower value than that of YSZ from room temperature to a high temperature of 1300 °C.

Evaluation Test 2

The refractive indexes of $Hf_6Ta_2O_{17}$ and $HfO_2$ (hafnia), which are the compounds that can form the intermediate layers in the thermal barrier coatings according to the embodiments of the present invention, were measured. In addition, the refractive index of $Al_2O_3$ (alumina) as a comparative sample was measured.

(1) Production of Evaluation Sample

(1-1) Sintered Body of $Hf_6Ta_2O_{17}$:

An evaluation sample was produced in the same manner as Evaluation Test 1. (1-2) Sintered Body of $HfO_2$:

$HfO_2$ powder (99.99 % or higher, EM Japan Co., Ltd.) was subjected to press molding (pressure: 25 MPa). Then, this molded body was heat-treated in an air atmosphere at 1600 °C for 5 hours to produce a sintered body. The density $\rho$ was 9.91 g/cm$^3$.

(2) Production of Comparative Sample

Sintered Body of $Al_2O_3$:

$Al_2O_3$ powder (99.9999 % or higher, TAIMEI CHEMICALS CO., LTD.) was subjected to press molding (pressure: 25 MPa). Then, this molded body was heat-treated in an air atmosphere at 1500 °C for 5 hours to produce a sintered body. The density $\rho$ was 3.97 g/cm$^3$.

(3) Measurement of Refractive Index

The refractive index of each sample was measured in the wavelength range of 500 nm to 2000 nm using a spectroscopic ellipsometer (manufactured by Horiba, Ltd., trade name: UVISEL).

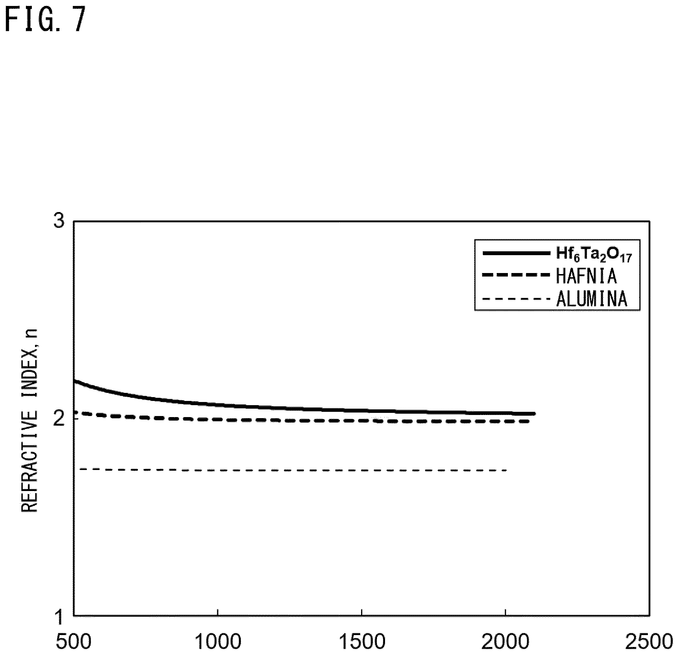

FIG. 7 is a graph showing the results of this evaluation test and shows the wavelength dependence of refractive index.

As shown in FIG. 7, it was clarified that the refractive indexes of $Hf_6Ta_2O_{17}$ and $HfO_2$ consistently exhibited higher values than that of $Al_2O_3$ in the wavelength range of 500 nm to 2000 nm.

From this, it was considered that, when a $HfO_2$ layer or a $Hf_6Ta_2O_{17}$ layer is provided on an $Al_2O_3$ layer, a great refractive index difference is formed between the $Al_2O_3$ layer and the $HfO_2$ layer or the $Hf_6Ta_2O_{17}$ layer, and thermal energy incident from the outside can be effectively reflected.

Evaluation Test 3

Evaluation Test 3 was conducted in order to predict the interface stability between a $HfO_2$ layer and a $Hf_6Ta_2O_{17}$ layer.

$HfO_2$ powder and $Hf_6Ta_2O_{17}$ powder were blended in a composition of 49.2 wt% and 50.8 wt%, respectively, such that the volume fractions thereof were equal, and these powders were mixed using a mortar.

The $HfO_2$ powder and the $Hf_6Ta_2O_{17}$ powder used in Evaluation Test 3 were the same as the sintering powders used in Evaluation Test 2 described above.

This mixed powder was press-molded (pressure: 25 MPa) and then heat-treated in an air atmosphere at 1400 °C for 20 hours.

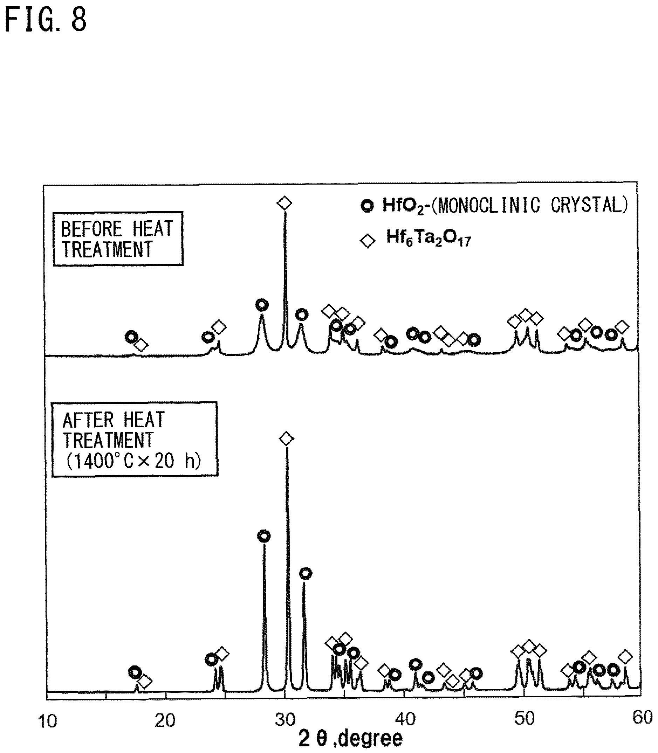

X-ray diffraction was performed on the mixed powder before heat treatment and the sintered body after heat treatment. The results are shown in FIG. 8.

FIG. 8 is an X-ray diffraction pattern obtained in this evaluation test.

As shown in FIG. 8, only diffraction lines of $HfO_2$ and $Hf_6Ta_2O_{17}$ were detected for both the mixed powder before heat treatment and the sintered body after heat treatment, and it was confirmed that no reaction proceeded between $HfO_2$ and $Hf_6Ta_2O_{17}$.

Evaluation Test 4

Evaluation Test 4 was conducted in order to predict the interface stability between an $Al_2O_3$ layer and a $Hf_6Ta_2O_{17}$ layer.

$Al_2O_3$ powder and $Hf_6Ta_2O_{17}$ powder were blended in a composition of 27.7 wt% and 72.3 wt%, respectively, such that the volume fractions thereof were equal, and these powders were mixed using a mortar.

The $Al_2O_3$ powder and the $Hf_6Ta_2O_{17}$ powder used in Evaluation Test 4 were the same as the sintering powders used in Evaluation Test 2 described above.

This mixed powder was press-molded (pressure: 25 MPa) and then heat-treated in an air atmosphere at 1400 °C for 20 hours.

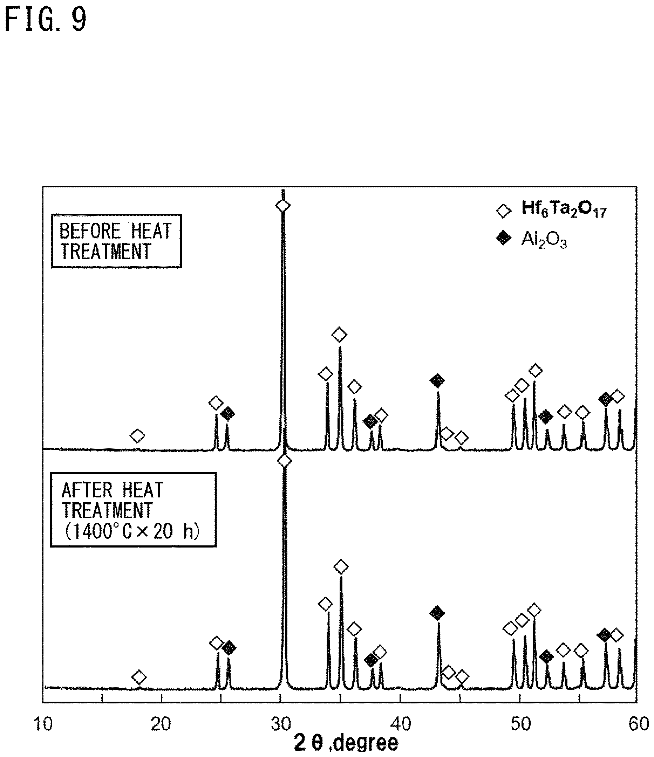

X-ray diffraction was performed on the mixed powder before heat treatment and the sintered body after heat treatment. The results are shown in FIG. 9.

FIG. 9 is an X-ray diffraction pattern obtained in this evaluation test.

As shown in FIG. 9, only diffraction lines of $Al_2O_3$ and $Hf_6Ta_2O_{17}$ were detected for both the mixed powder before heat treatment and the sintered body after heat treatment, and it was confirmed that no reaction proceeded between $Al_2O_3$ and $Hf_6Ta_2O_{17}$.

Evaluation Test 5

Evaluation Test 5 was conducted in order to predict the interface stability between a $Hf_6Ta_2O_{17}$ layer and a $YTa_3O_9$ layer.

$Hf_6Ta_2O_{17}$ powder and $YTa_3O_9$ powder were blended in a composition of 58.0 wt% and 42.0 wt%, respectively, such that the volume fractions thereof were equal, and these powders were mixed using a mortar.

This mixed powder was press-molded (pressure: 25 MPa) and then heat-treated in an air atmosphere at 1400 °C for 20 hours.

The $Hf_6Ta_2O_{17}$ powder used in Evaluation Test 5 was the same as the sintering powder used in Evaluation Test 1 described above.

Meanwhile, the $YTa_3O_9$ powder was produced by the following procedure.

28 g (0.072 mol) of $Y(NO_3)_3 \cdot 6H_2O$ powder (manufactured by KANTO CHEMICAL CO., INC.) having a purity of 99.99 % or higher was put into 713 g of distilled water contained in a reactor made of a fluorine resin, and the mixture was stirred at room temperature (25 °C) for 1 hour to obtain a colorless transparent aqueous solution.

Next, 540 g (9 mol) of urea was added to this aqueous solution, and the mixture was stirred at room temperature (25 °C) for 1 hour. Then, 50 g (0. 113 mol) of $Ta_2O_5$ powder (manufactured by RARE METALLIC Co., Ltd.) having a purity of 99.9 % or higher was added to the obtained colorless transparent aqueous solution, and the mixture was stirred at room temperature (25 °C) for 7 hours to obtain a suspension.

Next, the suspension was heated to 95 °C and reacted (urea hydrolysis reaction) with stirring under reflux cooling (reaction time: 14 hours). Then, the obtained reaction solution was centrifuged at 25 °C and 4800 rpm for 30 minutes, and the gel in the lower layer was collected. This gel was put into a large amount of distilled water, and the mixture was sufficiently stirred. Then, the mixture was centrifuged under the same conditions as above, and the gel in the lower layer was collected.

Then, the precipitate was heated in an air atmosphere at 120 °C for 14 hours to obtain dried powder. Next, the dried powder was sieved (100 mesh) to collect fine powder. This fine powder was subjected to press molding (pressure: 25 MPa) and then heat-treated in an air atmosphere at 1700 °C for 1 hour. The obtained sample was dry-ground in a mortar at room temperature to obtain fine powder. X-ray diffraction measurement was performed on the fine powder to confirm that the fine powder had an orthorhombic crystal system composed of $YTa_3O_9$.

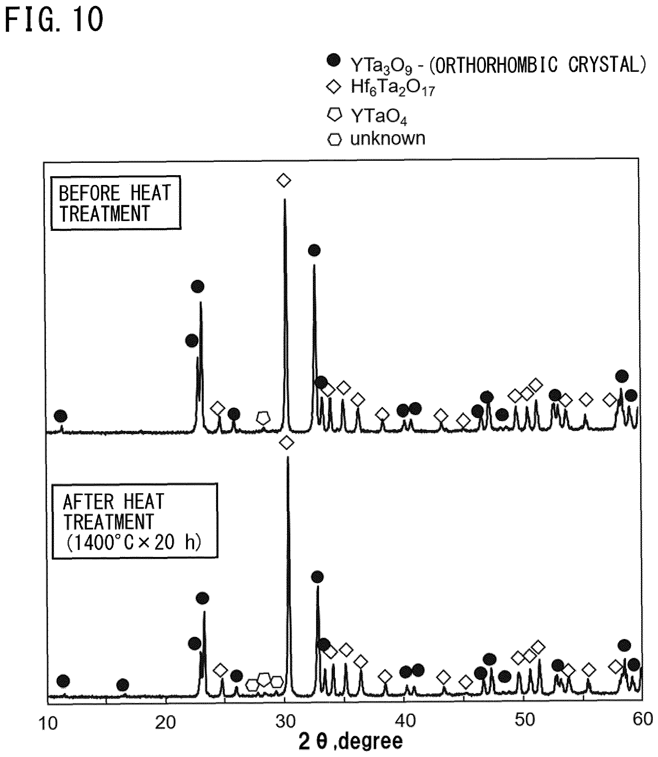

X-ray diffraction was performed on the mixed powder before heat treatment and the sintered body after heat treatment. The results are shown in FIG. 10.

FIG. 10 is an X-ray diffraction pattern obtained in this evaluation test.
As shown in FIG. 10, generation of hetero phase due to the heat treatment was very little, and it was confirmed that the reaction between $Hf_6Ta_2O_{17}$ and $YTa_3O_9$ was slight.

Evaluation Test 6

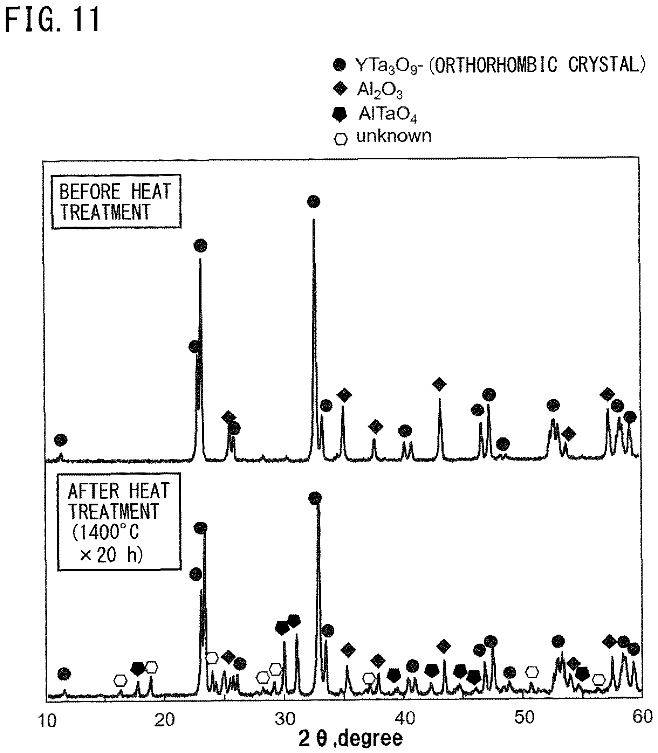

Evaluation Test 6 was conducted in order to predict the interface stability between an $Al_2O_3$ layer and a $YTa_3O_9$ layer.
$Al_2O_3$ powder and $YTa_3O_9$ powder were blended in a composition of 34.5 wt% and 65.5 wt%, respectively, such that the volume fractions thereof were equal, and these powders were mixed using a mortar.
The $Al_2O_3$ powder used in Evaluation Test 6 was the same as the sintering powder used in Evaluation Test 2 described above, and the $YTa_3O_9$ powder used in Evaluation Test 6 was the same as the sintering powder used in Evaluation Test 5 described above.
This mixed powder was press-molded (pressure: 25 MPa) and then heat-treated in an air atmosphere at 1400 °C for 20 hours.
X-ray diffraction was performed on the mixed powder before heat treatment and the sintered body after heat treatment. The results are shown in FIG. 11.
FIG. 11 is an X-ray diffraction pattern obtained in this evaluation test.
As shown in FIG. 11, strong diffraction lines of $AlTaO_4$, etc., were detected due to the heat treatment, and it was confirmed that reaction proceeded between $Al_2O_3$ and $YTa_3O_9$.

Example 1

A thermal barrier coating was produced by the following method.
As a substrate for forming the thermal barrier coating, a plate made of SUS430 stainless steel and having a length of 50 mm, a width of 75 mm, and a thickness of 2 mm was prepared, and a thermally sprayed coating having a thickness of 120 $\mu$m was formed on the substrate by high velocity flame spraying using CoNiCrAlY powder (particle size: 16 $\mu$m to 45 $\mu$m) as a spraying material.
Subsequently, a thermally sprayed coating having a thickness of 20 $\mu$m was formed on the thermally sprayed coating formed immediately before, by suspension plasma spraying using a $HfO_2$ slurry (solid content: 20 wt%, solvent: water, particle size: 0.8 $\mu$m to 13.2 $\mu$m) as a spraying material.
Subsequently, a thermally sprayed coating having a thickness of 250 $\mu$m was formed on the thermally sprayed coating formed immediately before, by suspension plasma spraying using a $YbTa_3O_9$ slurry (solid content: 25 wt%, solvent: ethanol, particle size: 0.2 $\mu$m to 1.3 $\mu$m) as a spraying material.
Through these steps, a thermal barrier coating in which a CoNiCrAlY layer, a $HfO_2$ layer, and a $YbTa_3O_9$ layer were laminated in this order on the plate made of SUS430 stainless steel was produced.

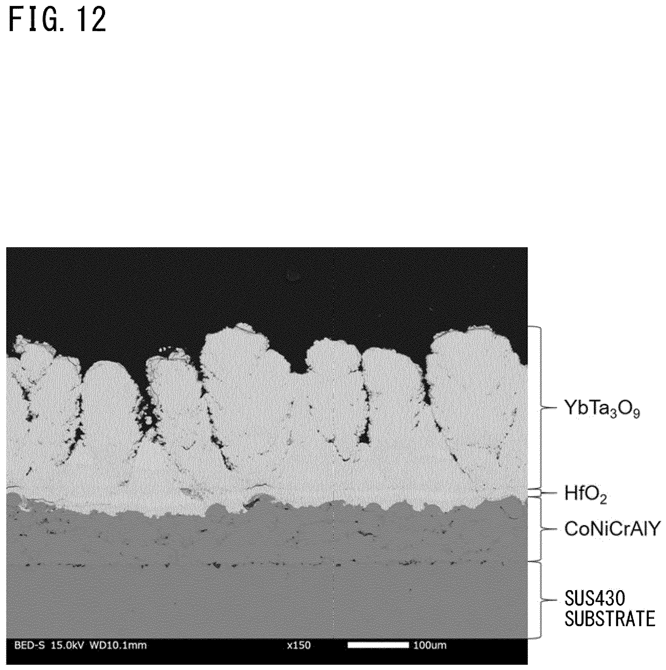

FIG. 12 is a photograph obtained when the sample (thermal barrier coating) produced as described above was cut and the cross-section of the sample was observed with a scanning electron microscope (SEM).
The thermal barrier coating formed on the substrate has a structure in which a metal bonding layer (CoNiCrAlY), an intermediate layer ($HfO_2$), and a thermal barrier layer ($YbTa_3O_9$) are laminated in this order from the substrate (SUS430) side as shown in FIG. 12.
The thermal barrier layer, which is the outermost layer, has a segment structure including a plurality of columnar structures erected so as to extend from the substrate side to the outermost layer side. The number of columnar structures included in the segment structure (segment number) was 9 (structures/mm) per unit length. Since a minute gap is present between adjacent columnar structures in the structure and thus residual stress is less likely to occur, even if the substrate and each layer formed thereon thermally expands or thermally contracts under heat cycle conditions, damage is less likely to occur.

LIST OF REFERENCE SIGNS

| | |
|---|---|
| 1 | thermal barrier coating |
| 2 | thermal barrier coating |
| 11 | metal bonding layer |
| 12 | alumina layer |
| 13 | first intermediate layer |
| 14 | second intermediate layer |

| 14a | outer second intermediate layer |
| 14b | inner second intermediate layer |
| 15 | thermal barrier layer |
| 15a to 15h | columnar structure |
| 16 | intermediate layer |
| 21 | metal bonding layer |
| 23 | first intermediate layer |
| 24 | second intermediate layer |
| 25 | thermal barrier layer |
| 26 | intermediate layer |

**Claims**

1. A thermal barrier coating comprising:

   - a metal bonding layer made of an alloy containing Al;
   - a thermal barrier layer; and
   - an intermediate layer provided between the metal bonding layer and the thermal barrier layer,
   wherein the thermal barrier layer contains a compound represented by the following general Formula (1),

$$Ln_xTa_yHf_zO_{(3x+5y+4z)/2} \cdots \qquad (1)$$

   wherein Ln is an atom of one element selected from among rare earth elements, x is 0 to 1.0, y is 0.8 to 3.0, and z is 0 to 7.0, and
   wherein the intermediate layer contains at least one layer selected from among the following (A) to (C),

   (A) a layer containing hafnium oxide ($HfO_2$) as a main component,
   (B) a layer containing, as a main component, a compound consisting of tantalum (Ta), hafnium (Hf), and oxygen (O), and
   (C) a layer containing, as a main component, a compound consisting of a rare earth element, tantalum (Ta), hafnium (Hf), and oxygen (O).

2. The thermal barrier coating according to claim 1,
   wherein the compound represented by the general Formula (1) is a complex oxide represented by the following general Formula (2),

$$LnTa_3O_9 \cdots \qquad (2)$$

   wherein Ln is an atom of one element selected from among rare earth elements.

3. The thermal barrier coating according to claim 1 or 2,
   further comprising a layer provided between the metal bonding layer and the intermediate layer and containing aluminum oxide ($Al_2O_3$).

4. The thermal barrier coating according to any one of claims 1 to 3,
   wherein the thermal barrier layer has a segment structure including a plurality of columnar structures.

5. The thermal barrier coating according to any one of claims 1 to 4,
   wherein the intermediate layer includes a layer having a porosity of 5 % by volume or less.

6. The thermal barrier coating according to any one of claims 1 to 5,
   wherein the intermediate layer includes the layer (A) and the layer (B), and the layer (A) is provided at the metal bonding layer side.

7. The thermal barrier coating according to any one of claims 1 to 6,
   wherein the intermediate layer includes the layer (B), and
   the layer (B) is a layer containing a compound represented by the following general Formula (3) as a main component,

$$Ta_yHf_zO_{(5y+4z)/2} \text{ wherein } y = 2.0, 5.0 \leq z \leq 7.0) \ldots \qquad (3).$$

8. The thermal barrier coating according to any one of claims 1 to 5, wherein the intermediate layer includes the layer (A) and the layer (C), wherein the layer (A) is provided at the metal bonding layer side, and wherein the layer (C) is a layer containing, as a main component, a compound consisting of a rare earth element that is the same as Ln in the general Formula (1), tantalum (Ta), hafnium (Hf), and oxygen (O).

FIG. 1

FIG. 2

# FIG. 3

15a  15b  15c  15d  15e  15f  15g  15h

15

BL

14

FIG. 4

14

14a

14b

FIG. 5

# FIG. 6

FIG. 7

# FIG. 8

FIG. 9

# FIG. 10

# FIG. 11

EP 3 760 756 A1

# FIG. 12

BED-S 15.0kV WD10.1mm    x150    ⎯⎯ 100um

- YbTa$_3$O$_9$
- HfO$_2$
- CoNiCrAlY
- SUS430 SUBSTRATE

29

## INTERNATIONAL SEARCH REPORT

International application No.

PCT/JP2019/008178

### A. CLASSIFICATION OF SUBJECT MATTER

Int.Cl. C23C4/11(2016.01)i, B32B9/00(2006.01)i, B32B15/04(2006.01)i,
C23C4/073(2016.01)i, F01D5/28(2006.01)i, F02C7/00(2006.01)i,
C23C28/00(2006.01)n

According to International Patent Classification (IPC) or to both national classification and IPC

### B. FIELDS SEARCHED

Minimum documentation searched (classification system followed by classification symbols)

Int.Cl. C23C4/11, B32B9/00, B32B15/04, C23C4/073, F01D5/28, F02C7/00,
C23C28/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 10-505299 A (GENERAL ELECTRIC CO.) 26 May 1998 & US 5914189 A & WO 1997/001436 A1 | 1-8 |
| A | JP 2010-511783 A (SIEMENS ENERGY, INC.) 15 April 2010 & US 2008/0131711 A1 & WO 2008/140481 A2 & KR 10-2009-0115928 A | 1-8 |
| A | US 2006/0171813 A1 (HONEYWELL INTERNATIONAL INC.) 03 August 2006 (Family: none) | 1-8 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 May 2019 (09.05.2019) | 21 May 2019 (21.05.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014125656 A

**Non-patent literature cited in the description**

- **C. WAN et al.** *Acta Mater.,* 2010, vol. 58, 6166-6172